Europäisches Patentamt

European Patent Office

Office européen des brevets

(11) Publication number: **0 368 603**
**A2**

# (12) EUROPEAN PATENT APPLICATION

(21) Application number: **89311493.4**

(22) Date of filing: **07.11.89**

(51) Int. Cl.⁵: **A21D 15/00**

(30) Priority: **07.11.88 GB 8826000**

(43) Date of publication of application:
**16.05.90 Bulletin 90/20**

(84) Designated Contracting States:
**AT BE CH DE ES FR GB GR IT LI LU NL SE**

(71) Applicant: **UNITED BISCUITS (UK) LIMITED**
**12 Hope Street**
**Edinburgh Scotland(GB)**

(72) Inventor: **Wilkes, Malcolm Stuart**
**Thornbury Cottage The Cricket Common**
**Cookham Dean Berkshire SL6 9NZ(GB)**
Inventor: **Kaur, Parvinder**
**38 Cumberland Close**
**Little Chalfont Buckinghamshire(GB)**
Inventor: **Gordon, Kay Helen**
**11 Gorselands Emmer Green**
**Reading Berkshire RG4 8QZ(GB)**

(74) Representative: **Ackroyd, Robert et al**
**Pollak, Mercer & Tench Eastcheap House**
**Central Approach**
**Letchworth Hertfordshire SG6 3DS(GB)**

(54) **Food product preservation.**

(57) Filled food products have fillings of pH 4.3 to 5.4 and have been heated or otherwise treated to destroy vegetative organisms. If the water activity of the filling is also 0.92 or less, the product is shelf-stable at ambient temperature without requiring packaging in an inert atmosphere. At water activities of 0.92 to 0.96 or less, an atmosphere of carbon dioxide is necessary. These particular combinations of features have been found to lead to particularly good eating qualities, even after re-heating.

EP 0 368 603 A2

## FOOD PRODUCT PRESERVATION

This invention relates to food products, for exmaple in the form of dough-based goods having fillings, the products being commercially stable and so capable of long-term storage under ambient temperature conditions.

A number of discoveries have been made which enable food products of high-level eating quality to be produced, which also do not allow the growth of micro-organisms. Traditional means for the preservation of food include reduction of the pH of the food products or components of them, e.g. fillings in sandwiches, and also reduction of their water activity. However, these known expedients lead to food products, including sandwiches, which are either sour-tasting or dry-tasting.

It has now been found that food products can be made, which can be preserved for long periods at ambient temperature.

The present invention provides in a first aspect a food product having a pH in the range 4.3 to 5.4 and a water activity of 0.96 or less, the product having been heated or otherwise treated to destroy vegetative organisms and being contained in a gas-impermeable enclosure under an inert atmosphere.

The inert atmosphere can comprise, for exampole, carbon dioxide or nitrogen, or a mixture thereof. A mixture of carbon dioxide and air, for example, 80%/20% by volume can also be used. In all cases, the inert gas should contain not more than 5.0% oxygen by volume, preferably not more than 2.5% by volume and most preferably not more than 0.3% by volume.

It has been found that the above combination of features leads to products which are shelf-stable without refrigeration and have good eating qualities, particularly moist mouthfeel, even after re-heating, for example by toasting.

The food product preferably has a water activity of 0.92 or less.

The water activity will usually, but not necessarily always, be greater than 0.86.

It has also been found that, when the water activity is as low as 0.92 or lower, it is no longer necessary to keep the food product under an inert atmosphere. The invention accordingly provides in a second aspect a food product having a pH in the range 4.3 to 5.4 and a water activity of 0.92 or less, the product having been heated or otherwise treated to destroy vegetative organisms and being contained in a gas-impermeable enclosure. The enclosure may contain air, an inert atmosphere as mentioned above, or other gas or gases.

The enclosure of either product may contain a further container incorporating a controlled-porosity element, for example of controlled-porosity paper or plastics material. Such a container may take the form of, for example, a tray sealed with a web constituting the controlled-porosity element.

Suitable porous papers and plastics sheets have Bendtsen porosities in the range 200 to 2000 $cm^3$ $min^{-1}$, preferably 200 to 1500 $cm^3$ $min^{-1}$, and more preferably 200 to 1000 $cm^3$ $min^{-1}$, for example about 250 $cm^3$ $min^{-1}$. One suitable paper is that sold under the name Sterisheet AS/A3 by Wycombe Marsh Paper Mills Limited of High Wycombe, Buckinghamshire, HP11 1ES, England.

Vegetative organisms in the food product are preferably destroyed by heating, normally to at least 70° C, more conveniently 70 to 90° C for an appropriate time period, for example 30 to 60 min. Higher temperatures can be used, which allow correspondingly shorter time periods. Such heating should be to effect pasteurisation, but not sterilisation.

All pH values contained in this specification and its claims are as obtained by the following procedure:

The food product to be tested is homogenised, for example by grinding, mincing or maceration. 10g of the homogenised sample is mixed with 10$cm^3$ of fresh, de-ionised, double-distilled water to form a slurry, into which the top of a pH electrode is promptly inserted to depth at which it is covered by the slurry. When stable, the pH reading is taken.

All water activity values contained in this specification and its claims are as obtained by the following procedure:

A well-mixed sample of the food product to be tested is placed in a sample pot which is then placed in the sensor chamber of a Novasina TH2 water activity meter. Sample readings are taken at 15 min intervals, until two consecutive readings agree.

All water activity values given are values at 25° C.

The invention will now be described further with reference to the following experimental results.

15kg batches of cheese and bacon filling for filled pastry food products were made according to the following basic procedure:

| Flavourings | Weight | % |
|---|---|---|
| Chopped Cooked Bacon | 2579 | 17.19 |
| Cheese Coat "n" Sauce | 825 | 5.50 |
| Dried Onion Pieces SDO 139 | 104 | 0.69 |
| Black Pepper | 21 | 0.14 |
| Dried Mustard | 21 | 0.14 |
| Grated Cheddar Cheese | 825 | 5.50 |
| Emulsion | 10615 | 70.76 |
| Emulsion | | |
| Water | 3324 | 22.16 |
| Caseinate EM375 | 833 | 5.55 |
| Oil | 4155 | 27.70 |
| Xanthan Gum | 18 | 0.12 |
| Water | 831 | 5.54 |
| Lactic Acid | 54 | 0.36 |
| Edible Whey | 1091 | 7.27 |
| Sugar | 209 | 2.06 |

The ingredients were processed as follows:

| | Sequence | Time of Addition |
|---|---|---|
| | | No. of Revolutions |
| 1. | Preparation of caseinate emulsion in bowl chopper | |
| | Caseinate-water (80%) | 40 fast |
| | Oil/Gum | 100 fast |
| | Lactic Acid/Water (20%) | 10 slow |
| | Sugar | 10 slow |
| | Edible Whey | 10 slow |
| 2. | Transfer emulsion to paddle mixer and add the following ingredients: | |
| | Dry ingredients - | |
| | Cheese Coat "n" Sauce | 1 minute mixing |
| | Onion Pieces | |
| | Black Pepper | |
| | Grated Cheddar Cheese | |
| | Bacon | 1 minute mixing |

By variation of the amounts chopped cooked bacon (to vary the salt content), sugar and lactic acid in this basic recipe, the water activity and pH of each batch of filling were varied as shown in Table 1.

Flaky pastry was prepared from the following ingredients:

| | Weight | % |
|---|---|---|
| Bowmans No. 1 Flour | 1138.0 | 59.64 |
| Pastry Fat (Flex) | 132.0 | 6.92 |
| Salt | 10.0 | 0.53 |
| Yoghurt Powder (Full Strength) | 76.0 | 3.98 |
| Water | 436.0 | 22.85 |
| Liquid Egg | 116.0 | 6.08 |
| Laminating Fat - | | |
| Flex at 20% of total recipe weight - 399g | | |

3

After rolling to a thickness of about 2 to 3 mm, the dough was cut into "bases" measuring 12.5 x 8.5cm and "lids" measuring 16.0 x 10.5cm. The bases were then glazed using a mixture of equal weights of full fat whole milk and whole liquid egg. Two 40g portions of each batch of filling, prepared as above, were then placed on the bases in two regions. The tops were then added and the tops and bottoms sealed around the edges and between the filling portions. The edges were trimmed and the lids glazed. Further filled products were likewise prepared for each batch of filling.

The filled products were placed in impermeable paper trays which were then closed by webs of controlled-porosity paper sealed to the rim of the paper tray. The trays were then passed through a three-zone conveyor oven set at 220, 220 and 240° C, for a total of 35 minutes.

The trays containing the baked products were then either passed through a tunnel containing a carbon dioxide atmosphere, in order to replace the atmosphere within the covered tray by an atmosphere of carbon dioxide containing no more than 5.0% oxygen by volume, or were allowed to cool in air, so that the atmosphere covered tray was air. All trays were finally sealed into gas-impermeable envelopes in a form/fill/seal packaging machine. The trays were stored at 25° C and, at appropriate time intervals, trays from each batch were opened and their contents examined microbiologically. By use of standard microbiological test procedures, aerobic and anaerobic bacterial counts were carried out on the food products. Any product showing a bacterial count (either aerobic or anaerobic) of greater than $10000g^{-1}$ was regarded as unstable and not suitable for consumption. Table 1 shows the results obtained

Table 1

| Batch | Water Activity | pH | Week to which stable under | |
|---|---|---|---|---|
| | | | CO$_2$ | Air |
| 1 | 0.94 | 4.78 | 11 | 5 |
| 2 | 0.94 | 4.86 | 12 | 2 |
| 3 | 0.93 | 3.20 | 12 | 2 |
| 4 | 0.93 | 5.06 | 12 | 12 |
| 5 | 0.93 | 5.09 | 12 | 12 |
| 6 | 0.93 | 5.20 | 12 | 2 |
| 7 | 0.92 | 5.00 | 12 | 12 |
| 8 | 0.92 | 5.08 | 12 | 2 |
| 9 | 0.92 | 5.12 | 12 | 12 |
| 10 | 0.92 | 5.15 | 12 | 12 |

These results, and the results of many more tests carried out, have shown that products having a pH in the range 4.3 to 5.4 can have acceptable shelf-stabilities even when kept under air, provided that their water activities are 0.92 or less. When the product is kept under carbon dioxide, water activities up to 0.96 still provide products of acceptable shelf- stability.

Our European Patent Application filed simultaneously hereto and claiming priority from UK Applications 8825998.1, 8825999.9 and 8826000.5, all dated 7 November 1988 describes food products which can constitute the food product of this application. Our European Patent Application filed simultaneously hereto and claiming priority from UK Application 8825999.9 describes a method of manufacture of a package which can contain the food product of this application and also provides further details of the baking and gas-treatment procedures carried out on the test products mentioned above.

**Claims**

1. A food product having a pH in the range 4.3 to 5.4 and a water activity of 0.96 or less, the product having been heated or otherwise treated to destroy vegetative organisms and being contained in a gas-impermeable enclosure under an inert atmosphere.

2. A food product according to claim 1, in which the water activity is 0.92 or less.

4

3. A food product according to claim 1 or 2, in which the inert atmosphere comprises carbon dioxide and/or nitrogen.

4. A food product according to any preceding claim, in which the inert atmosphere contains no more than 5% by volume of oxygen.

5. A food product having a pH in the range 4.3 to 5.4 and a water activity of 0.92 or less, the product having been heated or otherwise treated to destroy vegetative organisms and being contained in a gas-impermeable enclosure.

6. A food product according to claim 5, in which the atmosphere within the enclosure is air.

7. A food product according to any preceding claim, in which the food product is contained within the enclosure in a container incorporating a controlled-porosity element.

8. A food product according to any preceding claim, in which vegetative organisms have been destroyed by heating to at least 70° C.

5